# FASCICULE DE BREVET EUROPEEN

(11) **EP 4 108 899 B1**
(45) Date de publication et mention de la délivrance du brevet: **05.06.2024**
(21) Numéro de dépôt: 22179445.6
(22) Date de dépôt: 16.06.2022
(51) Int. Cl.: F02C 7/36, F16H 1/28, F16H 57/08

(54) **PORTE-SATELLITES POUR UN REDUCTEUR DE VITESSE DE TURBOMACHINE D'AERONEF**
SATELLITENTRÄGER FÜR EIN UNTERSETZUNGSGETRIEBE EINES TURBOTRIEBWERKS EINES LUFTFAHRZEUGS
PLANET CARRIER FOR A SPEED REDUCER OF AN AIRCRAFT TURBINE ENGINE

(30) Priorité: 24.06.2021 FR 2106793
(43) Date de publication de la demande: 28.12.2022
(73) Titulaire: Safran Transmission Systems, 92700 Colombes (FR)
(72) Inventeur: MOULY, Guillaume Pierre, 77550 MOISSY-CRAMAYEL (FR); SEREY, Jean-Pierre, 77550 MOISSY-CRAMAYEL (FR)
(74) Mandataire: Gevers & Orès

(56) Documents cités:
- DE-A1-102019 127 546
- FR-A- 1 379 451
- US-A- 5 466 198

## Description

### Domaine technique de l'invention

La présente invention concerne un porte-satellites pour un réducteur de vitesse de turbomachine d'aéronef, ainsi qu'un réducteur de vitesse pour une turbomachine d'aéronef.

### Aval-plan technique

L'état de l'art comprend notamment les documents FR-A1-2 987 416, FR-A1-2 853 382, FR-A1-3 041 054, FR-A1-3 052 213, FR-A1-3 073 915, FR-A1-3 084 428, et US-5.466.198-A.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différent et sont équirépartis sur le même diamètre de fonctionnement autour de l'axe des planétaires. Ces axes sont parallèles à l'axe longitudinal de la turbomachine.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique. Il existe plusieurs types d'engrènement par contact comme avec des dentures droites ou en chevron.

Le porte-satellites peut être monobloc ou se présenter sous la forme d'une cage et d'un porte-cage. La cage comprend une cavité interne dans laquelle sont logés le solaire, les satellites et les paliers de guidage de ces satellites. Le solaire comprend des cannelures internes d'accouplement à un premier arbre de la turbomachine et le porte-cage comprend une portion cylindrique comportant des cannelures externes d'accouplement à un autre arbre.

La liaison de la cage au porte-cage est en général rigide. En variante, on peut envisager une technologie dans laquelle la cage est reliée au porte-cage par des liaisons « souples », telles que décrites dans le document FR-A1-2 853 382. Dans un tel cas, le porte-cage comprend une rangée annulaire de doigts axiaux qui portent des premiers éléments de liaison. Ces premiers éléments de liaison coopèrent avec des seconds éléments de liaison montés dans des logements de la cage pour former les liaisons souples entre le porte-cage et la cage, qui autorisent au moins un degré de liberté.

On a proposé de réaliser ces liaisons souples par des rotules, les doigts portant des rotules traversées par des broches cylindriques s'étendant dans les logements de la cage.

En fonctionnement, lors de la mise sous couple du porte-satellites, les doigts vont fléchir et transmettre le couple à la cage. Les rotules permettent de ne pas transmettre le fléchissement des doigts aux broches. Le porte-cage maintient la cage dans son plan de symétrie afin d'équilibrer la récupération des efforts de part et d'autre des satellites.

Le montage des satellites dans la cage n'est parfois pas réalisable ni par l'intérieur ni par l'extérieur de la cage, imposant alors de découper la cage en plusieurs pièces afin de monter les satellites avant de refermer l'ensemble des pièces de la cage.

Une solution à ce problème pourrait consister à dissocier un des côtés de la cage du reste de la cage et à prévoir des brides annulaires de fixation respectivement sur le côté et le reste de la cage. Cependant, ces brides et les moyens de fixation (vis) de ces vis devraient être dimensionnés pour supporter au moins 50% de la charge du réducteur, ce qui se traduirait par des brides encombrantes et lourdes et des moyens de fixation de ces brides très contraints en fonctionnement.

La présente invention propose un perfectionnement qui apporte une solution simple, efficace et économique à au moins une partie des problèmes évoqués ci-dessus.

### Résumé de l'invention

L'invention concerne un porte-satellites pour un réducteur de vitesse de turbomachine, ce porte-satellites ayant un axe X principal et comportant:
- un porte-cage comportant une rangée annulaire de doigt axiaux autour de l'axe X, qui comportent des premiers éléments de liaison, et
- une cage comportant une cavité interne configurée pour contenir un solaire central d'axe X de rotation et une rangée annulaire de satellites disposés autour de l'axe X et engrenés avec ledit solaire ainsi qu'avec une couronne destinée à entourer la cage, la cage comportant à sa périphérie des logements et des seconds éléments de liaison qui sont montés dans lesdits logements et qui coopèrent avec les premiers éléments de liaison pour former des liaisons entre le porte-cage et la cage, lesdites liaisons ayant au moins un degré de liberté,

la cage comprenant deux coquilles qui sont assemblées axialement l'une à l'autre, lesdits premiers ou seconds éléments de liaison comportant des broches orientées radialement par rapport audit axe X et traversants des orifices radiaux desdites coquilles,
caractérisé en ce que chacune des coquilles comprend des pattes qui sont régulièrement réparties autour de l'axe X et qui sont au moins en partie superposées en direction radiale avec les pattes de l'autre coquille ces pattes comportant un ou deux orifices radiaux de montage de chacune des broches.

La présente invention propose ainsi d'utiliser des broches pour les éléments de liaison de la cage ou du porte-cage, ces broches étant orientées radialement et montées dans des orifices radiaux des deux coquilles de la cage. Contrairement à la solution évoquée dans ce qui précède consistant à dissocier un des côtés de la cage du reste de la cage et dans laquelle les broches seraient portées uniquement par le reste de la cage, les broches sont ici portées par les coquilles de la cage, ce qui permet à ces coquilles de reprendre chacune une partie des efforts qui transitent entre la cage et le porte-cage en fonctionnement.

La présente invention est compatible
- d'un réducteur à simple étage ou à plusieurs étages;
- d'un réducteur planétaire, épicycloïdal ou différentiel; et
- de dentures droites, hélicoïdales ou en chevron.

Le porte-satellites selon l'invention peut comprendre les caractéristiques suivantes comme définies dans les revendications dépendantes.
- lesdits seconds éléments comportent lesdites broches et des rotules traversées par ces broches, et lesdits premiers éléments comportent des bagues dans lesquelles sont logées lesdites rotules;
- lesdits premiers éléments comportent lesdites broches et des rotules traversées par ces broches, et lesdits seconds éléments comportent des bagues dans lesquelles sont logées lesdites rotules;
- chacune des pattes d'une première des coquilles comprend deux premières parois parallèles qui comprennent respectivement deux orifices radiaux alignés de montage d'une des broches, et/ou chacune des pattes d'une seconde des coquilles comprend deux secondes parois parallèles qui comprennent respectivement deux orifices radiaux alignés de montage de cette même broche;
- les premières parois sont situées entre les secondes parois, ou l'une des premières parois est intercalée entre les deux secondes parois;
- lesdits doigts sont intercalés entre les premières parois et entre les secondes parois;
- lesdits doigts ont chacun une forme générale en C et comportent deux branches parallèles entre lesquelles sont intercalées lesdites première et seconde parois; et
- les coquilles sont en appui axial l'une contre l'autre, et/ou sont fixées axialement l'une à l'autre, et/ou sont imbriquées axialement et/ou circonférentiellement l'une dans l'autre.

La présente invention concerne également un réducteur mécanique pour une turbomachine d'aéronef, comportant un porte-satellites tel que décrit ci-dessus, un solaire monté dans ladite cavité et centré sur ledit axe X, une couronne s'étendant autour du solaire, et des satellites montés dans ladite cavité et engrenés avec le solaire et la couronne.

L'invention concerne en outre une turbomachine, en particulier d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels:
[Fig. 1] la figure 1 est une vue schématique en coupe axiale d'une turbomachine utilisant l'invention;
[Fig. 2] la figure 2 est une vue schématique en coupe axiale d'un réducteur à train épicycloïdal;
[Fig. 3] la figure 3 est une vue en perspective d'un ensemble cage et porte-cage formant un porte-satellites de réducteur;
[Fig. 4] la figure 4 est une vue en coupe axiale et partielle d'une partie du porte-satellites de la figure 3;
[Fig. 5] la figure 5 est une vue de détail de la figure 4;
[Fig. 6] la figure 6 est une vue schématique partielle et en coupe axiale d'un porte-satellites de réducteur selon l'invention, et montre une liaison entre la cage et le porte-cage de ce porte-satellites;
[Fig. 7a-7d] les figures 7a-7d illustrent de manière très schématique plusieurs variantes de réalisation de la liaison de la figure 6;
[Fig. 8] la figure 8 est une vue schématique en perspective d'un élément de liaison des deux coquilles d'une cage pour un porte-satellites selon l'invention;
[Fig. 9] la figure 9 est une vue schématique en coupe d'une liaison entre une porte-cage et la cage de la figure 8; et
[Fig. 10a-10d] les figures 10a-10d illustrent de manière très schématique plusieurs variantes de réalisation des éléments de liaison des coquilles de la cage, la figure 10a correspondant à la vue de la figure 8.

### Description détaillée de l'invention

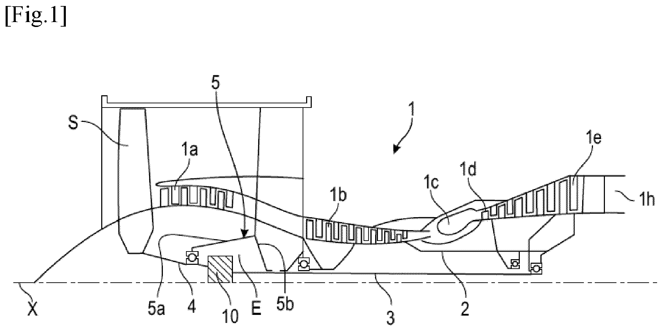

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 10. Ce réducteur est généralement de type planétaire ou épicycloïdal.

Bien que la description qui suit concerne un réducteur du type planétaire ou épicycloïdal, elle s'applique également à un différentiel mécanique dans lequel ses trois composants essentiels, que sont le porte-satellites, la couronne et le solaire, sont mobiles en rotation, la vitesse de rotation de l'un de ces composants dépendant notamment de la différence de vitesses des deux autres composants.

Le réducteur 10 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 10. Cette enceinte E est ici fermée en amont par des joints au niveau d'un palier permettant la traversée de l'arbre de soufflante 4, et en aval par des joints au niveau de la traversée de l'arbre BP 3.

La figure 1 montre une partie d'un réducteur 10 qui peut prendre la forme de différentes architectures selon si certaines pièces sont fixes ou en rotation. En entrée, le réducteur 10 est relié à l'arbre BP 3, par exemple par l'intermédiaire de cannelures 7. Ainsi, l'arbre BP 3 entraîne un pignon planétaire appelé le solaire 11. Classiquement, le solaire 11 dont l'axe de rotation est confondu avec l'axe X de la turbomachine 1, entraîne une série de pignons appelés satellites 12, qui sont équirépartis sur le même diamètre autour de l'axe de rotation X. Ce diamètre est égal au double de l'entraxe de fonctionnement entre solaire 11 et satellites 12. Le nombre de satellites 12 est généralement défini entre trois et sept pour ce type d'application.

L'ensemble des satellites 12 est maintenus par un châssis appelé porte-satellites 12. Chaque satellite 12 tourne autour de son propre axe Y, et engrène avec la couronne 14.

En sortie du réducteur 10, nous avons:
∘ Dans une configuration épicycloïdale, l'ensemble des satellites 12 entraine en rotation le porte-satellite 13 autour de l'axe X de la turbomachine. La couronne 14 est fixée au carter moteur ou stator 5 via un porte-couronne 15 et le porte-satellites 12 est fixé à l'arbre de soufflante 4.
∘ Dans une configuration planétaire, l'ensemble des satellites 12 est maintenu par un porte-satellites 12 qui est fixé au carter moteur ou stator 5. Chaque satellite entraine la couronne qui est rapportée à l'arbre de soufflante 4 via un porte-couronne 15.

Chaque satellite 12 est monté libre en rotation à l'aide d'un palier 8, par exemple de type roulement ou palier hydrostatique. Chaque palier 8 est monté sur un des axes 13a du porte-satellites 12 et tous les axes sont positionnés les uns par rapport aux autres à l'aide d'un ou plusieurs châssis structurels du porte-satellites 12. Il existe un nombre d'axes et de paliers égal au nombre de satellites. Pour des raisons de fonctionnement, de montage, de fabrication, de contrôle, de réparation ou de rechange les axes 13a et le châssis peuvent être séparés en plusieurs pièces.

Pour les mêmes raisons citées précédemment, la denture d'un réducteur peut être séparée en plusieurs hélices. Dans notre exemple nous détaillons le fonctionnement d'un réducteur 10 à plusieurs hélices avec une couronne séparée en deux demi-couronnes:
∘ Une demi-couronne avant 14a constituée d'une jante 14aa et d'une demi-bride de fixation 14ab. Sur la jante 14aa se trouve l'hélice avant de la denture du réducteur. Cette hélice avant engrène avec celle du satellite 12 qui engrène avec celle du solaire 11.
∘ Une demi-couronne arrière 14b constituée d'une jante 14ba et d'une demi-bride de fixation 14bb. Sur la jante 14ba se trouve l'hélice arrière de la denture du réducteur. Cette hélice arrière engrène avec celle du satellite 12 qui engrène avec celle du solaire 11.

La demi-bride de fixation 14ab de la couronne avant 14a et la demi-bride de fixation 14bb de la couronne arrière 14b forment la bride de fixation 14c de la couronne. La couronne 14 est fixée au porte-couronne 15 en assemblant la bride de fixation 14c de la couronne et la bride de fixation 15a du porte-couronne à l'aide d'un montage boulonné par exemple. Dans ce qui suit, une demi-bride pourra être appelée une bride.

Les flèches de la figure 1 décrivent l'acheminement d'huile dans le réducteur 10. L'huile arrive dans le réducteur 10 depuis la partie stator 5 dans le distributeur 16 par différents moyens qui ne seront pas précisés dans cette vue car ils sont spécifiques à un ou plusieurs types d'architecture. Le distributeur 16 est séparé en deux parties en général chacune répétée du même nombre de satellites. Les injecteurs 17a ont pour fonction de lubrifier les dentures, et les bras 17b ont pour fonction de lubrifier les paliers 8. L'huile est amenée vers l'injecteur 17a pour ressortir par l'extrémité 17c afin de lubrifier les dentures. L'huile est également amenée vers chaque bras 17b et circule via la bouche d'alimentation 17d du palier 8. L'huile circule ensuite à travers l'axe 13a dans une ou des zones tampons 13b pour ensuite ressortir par des orifices 13c afin de lubrifier les paliers 8 des satellites.

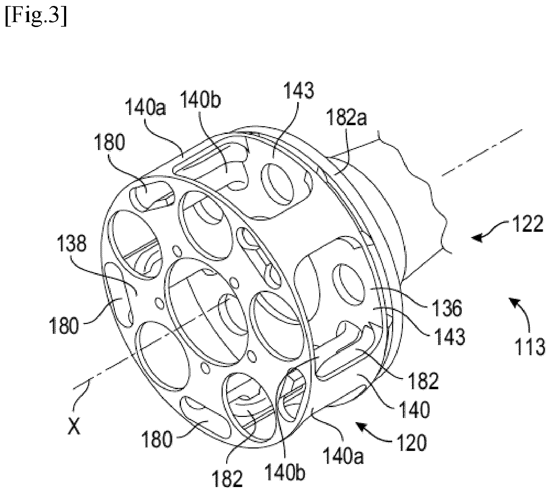

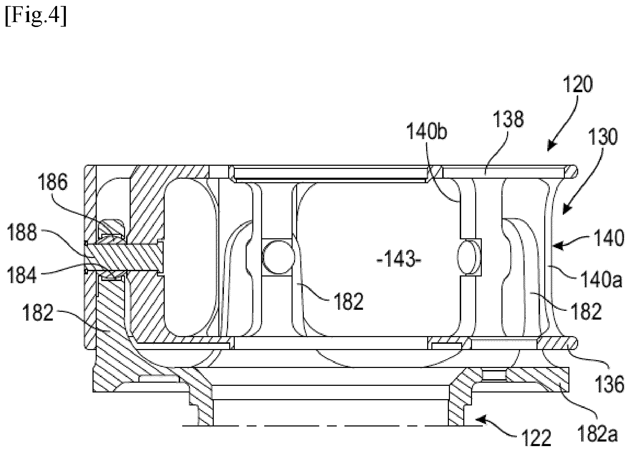

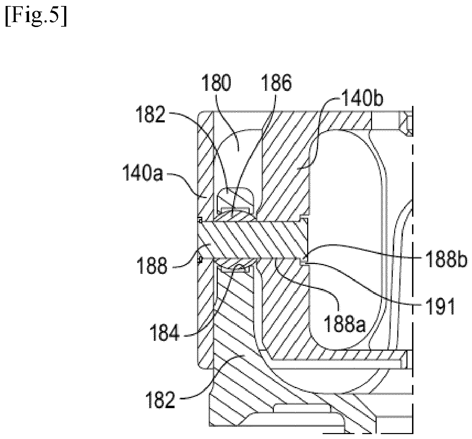

Dans les figures 3 à 5, les éléments déjà décrits dans ce qui précède sont désignés par les mêmes références augmentés d'une centaine.

Les figures 3 à 5 représentent une technologie particulière de porte-satellites 113, ce porte-satellites comportant une cage 120 et un porte-cage 122 reliés par des liaisons à rotules.

La cage 120 comprend deux parois annulaires radiales 136, 138 qui sont parallèles entre elles et perpendiculaires à l'axe X, ainsi qu'une paroi cylindrique 140 qui s'étend entre les périphéries externes de ces parois 136, 138.

La paroi cylindrique 140 est ici du type à double peau et comprend une peau externe 140a interrompue par les lumières 143 et une peau interne 140b interrompue par les mêmes lumières 143. La peau externe 140a séparée par cinq lumières 143 forme cinq pontets extérieurs et la peau interne 140b séparée par cinq lumières 143 forme cinq pontets intérieurs. Chaque couple de pontets inférieur et supérieur forment une chape pour accueillir le doigt 182 du porte-cage 122. Autrement dit, les pontets de chaque couple définissent entre eux un logement 180 de réception d'un doigt 182 du porte-cage 122. Les pontets assurent la liaison structurelle entre les parois 136 et 138. Des lumières 180 de forme oblongue sont réalisées dans au moins une des parois 136 et 138 de telle sorte à laisser passer le doigt 182 entre les pontets intérieur et extérieur.

La cage 120 comprend ainsi une rangée annulaire de logements 180. Ces logements 180 reçoivent les doigts axiaux 182 solidaires d'une paroi annulaire 182a sensiblement radiale du porte-cage 122. La paroi 182a est située à une extrémité axiale du porte-cage 122. Les doigts 182 s'étendent axialement depuis la paroi 182a et sont engagés par translation axiale dans les logements 180.

Chaque doigt 182 comprend, sensiblement en son milieu, une bague 184 de montage de la rotule 186 destinée à être traversé par une broche cylindrique 188 portée par la cage 120.

La bague 184 a une orientation sensiblement radiale par rapport à l'axe X. Il a une forme générale cylindrique. La cage 120 et la rotule 186 ont une épaisseur, mesurée dans une direction radiale par rapport à l'axe X, qui est inférieure à la distance inter-pontets ou l'épaisseur radiale de la lumière oblongue 180, de façon à pouvoir être engagées dans ce logement concomitamment avec le doigt 182 de support de ces pièces.

Chaque logement 180 est traversé par une broche 188 qui a une orientation sensiblement radiale par rapport à l'axe X. Chaque broche 188 comporte un corps cylindrique 188a relié à une extrémité axiale, ici radialement interne, à une collerette annulaire externe 188b. La broche 188 est ici engagée par translation radiale depuis l'intérieur à travers des orifices radiaux des pontets, sa collerette 188b étant destinée à venir en appui radial sur une face plane 191 du pontet extérieur de la cage 120. Après insertion de la broche 188 dans les orifices des pontets, jusqu'à mise en appui de la collerette 188b sur le pontet extérieur, la collerette 188b est fixée à ce pontet par exemple par vissage.

Comme on le voit aux figures 3 à 5, la cage 120 est formée d'une seule pièce et les broches 188 formant les éléments de liaison portés par la cage s'étendent en direction radiale et sont montées des orifices radiaux des pontets de cette cage 120.

L'invention propose un perfectionnement à cette technologie dans lequel la cage du porte-satellites est réalisée au contraire en deux parties, à savoir deux coquilles, et dans lequel les broches des éléments de liaison portées par la cage ou le porte-cage traversent des orifices radiaux de ces deux coquilles.

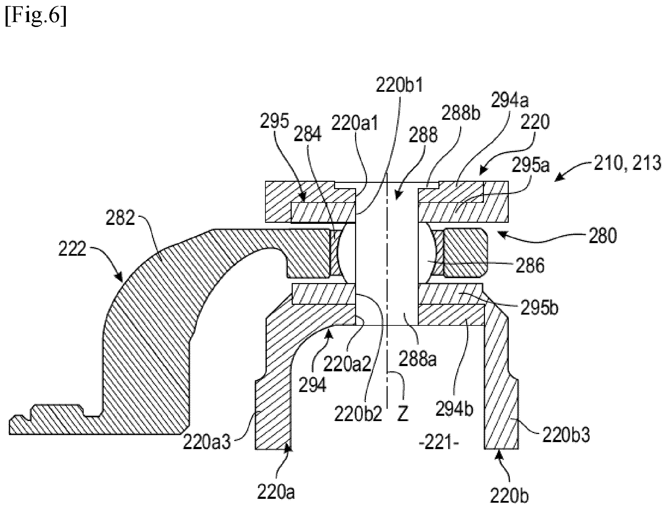

La figure 6 représente un premier mode de réalisation de l'invention.

La figure 6 montre partiellement la cage 220 et le porte-cage 222 du porte-satellites 213 de réducteur 210.

Le porte-cage 222 est similaire à celui décrit dans ce qui précède en référence aux figures 3 à 5.

De manière générale, le nombre de doigts 282 du porte-cage 222 peut être identique au nombre de satellites 12 du réducteur 210 et est par exemple de trois dans l'exemple représenté. Les doigts 282 sont régulièrement répartis autour de l'axe X principal du réducteur 210 et du porte-satellites 213.

Dans le mode de réalisation de la figure 6, chaque doigt 282 comprend un orifice radial dans lequel est montée une bague 284 qui peut être frettée dans cet orifice.

La bague 284 entoure une rotule 286 qui comprend un alésage interne orienté radialement et traversé par une broche 288 monté dans un des logements 280 de la cage. Les doigts 282 sont pour cela engagés dans les logements 280. L'axe radial commun de la broche 288, de l'alésage de la rotule 286 et de la bague 284 est noté Z.

Chaque broche 288 comporte un corps cylindrique 288a reliée à une extrémité axiale, située ici radialement à l'extérieur (en haut sur le dessin), à une collerette annulaire externe 288b. La broche 288 est ici engagée par translation radiale depuis l'extérieur à travers des orifices radiaux 220a1, 220a2, 220b1, 220b2 des coquilles 220a, 220b de la cage 220, et sa collerette 288b est destinée à venir en appui radial sur une face de l'une de ces coquilles 220a.

L'extrémité de la broche 288 opposée à la collerette 288b est frettée ou comprend un filetage de vissage d'un écrou.

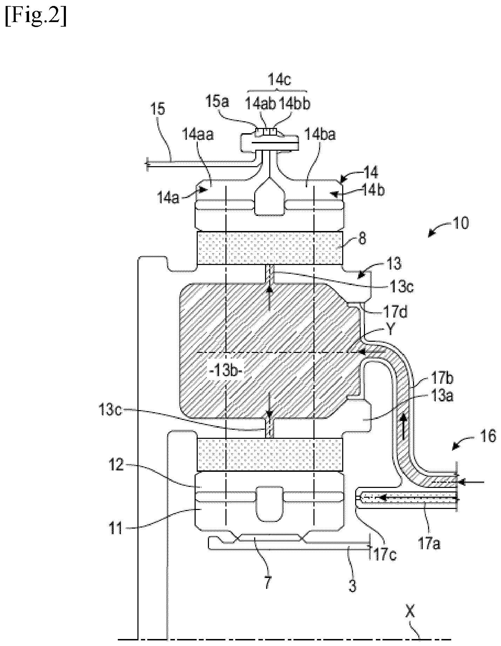

La cage 220 comporte une cavité interne 221 configurée pour contenir le solaire 11 et les satellites 12 disposés autour du solaire 11 et engrenés avec le solaire 11 ainsi qu'avec la couronne 14 destinée à entourer la cage 220 (cf. figure 2).

Une partie ou moitié axiale de la cavité 221 peut être définie par une des coquilles 220a et l'autre partie ou moitié axiale de la cavité 221 peut être définie par l'autre coquille 220b.

Les pontets de la cage 220 évoqués dans ce qui précède en relation avec les figures 3 à 5 sont ici formés par des parties des deux coquilles 220a, 220b.

La figure 6 ainsi que les variantes illustrées dans les figures suivantes montrent un de ces pontets et donc les parties des coquilles 220a, 220b qui permettent de former ce pontet et qui portent des éléments de liaison aux éléments de liaison du porte-cage 222.

Bien que la description qui suit concerne un pontet et les éléments de liaison au niveau de ce pontet, elle s'applique à l'ensemble des pontets de la cage 220.

Dans le cas de la figure 6, les éléments de liaison de la cage 220 sont formés par une broche 288 et une rotule 286 traversée par cette broche 288. La broche 288 traverse deux orifices radiaux 220a1, 220a2 de la coquille 220a et deux orifices radiaux 220b1, 220b2 de la coquille 220b, ces orifices 220a1, 220a2, 220b1, 220b2 étant alignés le long de l'axe Z.

Les orifices 220a1, 220a2, 220b1, 220b2 sont formés dans des pattes 294 des coquilles 220a, 220b. Une fois assemblées, les pattes 294 des coquilles 220a, 220b sont destinées à former le pontet. Les pattes 294 de chaque coquille 220a, 220b sont ainsi régulièrement réparties autour de l'axe X.

La coquille 220a, située à gauche à la figure 6, comprend des premières pattes 294 dont une seule est visible. Cette patte 294 s'étend en direction axiale depuis une paroi radiale 220a3 de la coquille 220a et comprend deux parois 294a, 294b, respectivement supérieure et inférieure. Ces parois 294a, 294b sont parallèles et s'étendent dans des plans perpendiculaires à l'axe Z. Ces parois 294a, 294b comportent les orifices 220a1, 220a2 qui sont alignés le long de l'axe Z. Ces parois 294a, 294b forment en outre une portion femelle.

La coquille 220b, située à droite à la figure 6, comprend des secondes pattes 295 dont une seule est visible. Cette patte 295 s'étend en direction axiale depuis une paroi radiale 220b3 de la coquille et comprend deux parois 295a, 295b, respectivement supérieure et inférieure. Ces parois 295a, 295b sont parallèles et s'étendent dans des plans perpendiculaires à l'axe Z. Ces parois 295a, 295b comportent les orifices 220b1, 220b2 qui sont alignés le long de l'axe Z. Ces parois 295a, 295b forment en outre une portion mâle qui est destinée à coopérer par engagement mâle/femelle avec les parois 294a, 294b de la coquille 220a, comme cela est représenté dans le dessin.

Pour cela, les coquilles 220a, 220b sont alignées axialement le long de l'axe X et les pattes 294, 295 sont également alignées axialement les unes avec les autres. Les coquilles 220a, 220b sont rapprochées l'une vers l'autre jusqu'à ce que les parois 295a, 295b de la coquille 220b s'engagent entre les parois 294a, 294b de la coquille 220b.

Comme on le voit à la figure 6, le logement 280 est formé pour l'essentiel entre les parois 295a, 295b de la coquille 220b, qui forment la portion mâle. La rotule 286 est insérée dans le logement 280 et entre les parois 295a, 295b de la coquille 220b. Elle est de préférence montée sans jeu en direction radiale, c'est-à-dire le long de l'axe Z.

La broche 288 traverse la rotule 286 comme évoqué dans ce qui précède, et le doigt 282 est monté dans le logement 280 avec des jeux radiaux pour autoriser des débattements angulaires du doigt 282 par rapport à la broche 288 en fonctionnement.

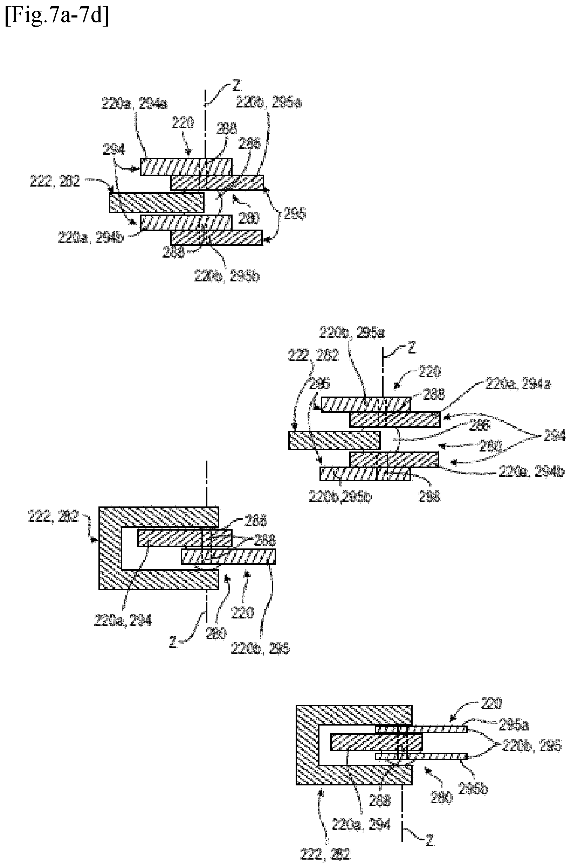

Les figures 7a à 7d montrent des variantes de réalisation des liaisons entre le porte-cage 222 et la cage 220 du porte-satellites 213.

Dans la variante de réalisation de la figure 7a, en haut à gauche, le porte-cage 222 et ses doigts 282 sont similaires à ceux de la figure 6.

La coquille 220a comprend des premières pattes 294 dont une seule est visible. Cette patte 294 s'étend en direction axiale depuis une paroi radiale (non visible) de la coquille et comprend deux parois, respectivement supérieure 294a et inférieure 294b. Ces parois 294a, 294b sont parallèles et s'étendent dans des plans perpendiculaires à l'axe Z. Ces parois 294a, 294b comportent les orifices qui sont alignés le long de l'axe Z.

La coquille 220b comprend des secondes pattes 295 dont une seule est visible. Cette patte 295 s'étend en direction axiale depuis une paroi radiale (non visible) de la coquille et comprend deux parois, respectivement supérieure 295a et inférieure 295b. Ces parois 295a, 295b sont parallèles et s'étendent dans des plans perpendiculaires à l'axe Z. Ces parois 295a, 295b comportent les orifices qui sont alignés le long de l'axe Z.

Les parois des coquilles 220a, 220b sont imbriquées de façon à ce que la paroi de la coquille 220b soit intercalée radialement entre la paroi de la coquille et le doigt 282, et que la paroi de la coquille 220a soit intercalée radialement entre la paroi de la coquille et le doigt 282.

Le montage des coquilles 220a, 220b peut avoir lieu comme indiqué ci-dessus en référence à la figure 6, jusqu'à ce que les pattes 294, 295 s'imbriquent axialement les unes dans les autres.

La variante de réalisation de la figure 7b, en haut à droite, correspond au mode de réalisation de la figure 6 à la seule différence que ce sont les pattes 294 de la coquille 220a qui forment des portions mâles, et que ce sont les pattes 295 de la coquille 220b qui forment des portions femelles.

Dans les variantes de réalisation de la figure 7c, en bas à gauche, et 7d, en bas à droite, chacun des doigts 282 du porte-cage 222 a une forme générale en C et comprend deux branches parallèles. Ces branches s'étendent dans des plans perpendiculaires à l'axe Z. Elles définissent entre elles un espace de logement des pattes 294, 295 et de leurs parois.

Dans le cas de la figure 7c, chaque patte 294 de la coquille 220a comprend une seule paroi qui est perpendiculaire à l'axe Z et comprend un orifice radial de montage de la broche 288. Chaque patte 295 de la coquille 220b comprend une seule paroi qui est perpendiculaire à l'axe Z et comprend un orifice radial de montage de la broche 288. La paroi de la coquille 220a est intercalée radialement entre la branche supérieure ou externe du doigt 282 et la paroi de la coquille 220b, et la paroi de cette coquille 220b est intercalée radialement entre la paroi de la coquille 220a et la branche inférieure ou interne du doigt.

Dans le cas de la figure 7c, la broche 288 est portée par le doigt 282 et non pas les coquilles 220a, 220b. La broche 288 traverse une rotule 286 comme illustré à la figure 6 et cette rotule 286 est montée rotulante dans une ou deux bagues portées par les parois des coquilles 220a, 220b.

Dans le cas de la figure 7d, chaque patte 294 de la coquille 220a comprend une seule paroi qui est perpendiculaire à l'axe Z et comprend un orifice radial de montage de la broche 288. Chaque patte 295 de la coquille 220b comprend deux parois 295a, 295b qui sont perpendiculaires à l'axe Z et qui comprennent chacune un orifice radial de montage de la broche 288. La paroi de la coquille 220a est intercalée radialement entre les parois 295a, 295b de la coquille 220b.

Dans le cas de la figure 7d, la broche 288 est également portée par le doigt 282 et traverse une rotule 286 comme illustré à la figure 6. Cette rotule 286 est montée rotulante dans une ou deux bagues portées par les parois des coquilles 220a, 220b.

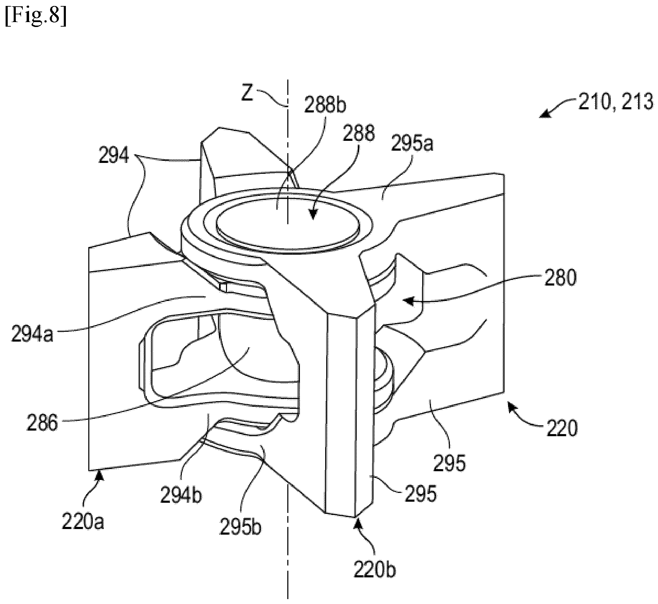

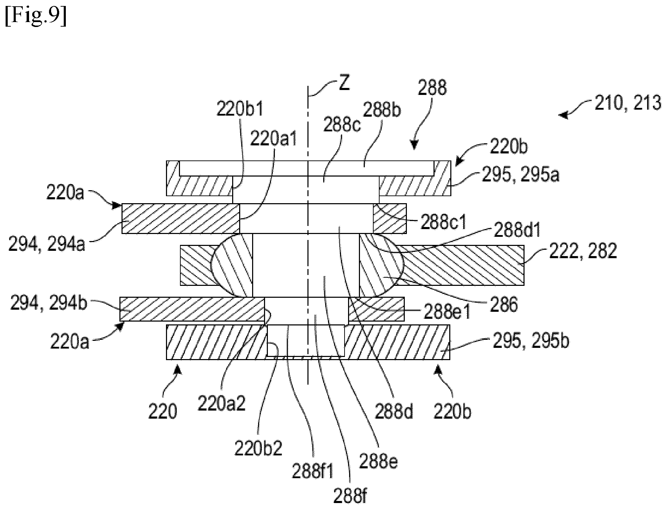

Les figures 8 et 9 montrent une autre variante de réalisation d'une liaison entre le porte-cage 222 et la cage 220 du porte-satellites 213.

Contrairement au mode de réalisation de la figure 6 dans lequel les parois des pattes 294, 295 sont en appui radial les unes sur les autres et imbriquées avec un ajustement serré les unes dans les autres, les parois des pattes 294, 295 des coquilles 220a, 220b sont ici configurées pour éviter toutes interférence et tout contact entre elles, et donc tout risque de *fretting.*

Pour parvenir à cette fin, la broche 288 peut être étagée comme illustré à la figure 9 et comprendre une succession de tronçons axiaux de différents diamètres répartis du plus grand au plus petit depuis la collerette 88b de cette broche. La broche 288 définit ainsi une succession de portées cylindriques qui prennent appui radialement sur les parois 294a, 294b, 295a, 295b et la rotule 286 afin de maintenir les parois à distance radiale les unes des autres.

Les pattes 294a, 295 et les parois 294a, 294b, 295a, 295b des coquilles 220a, 220b ont une configuration similaire à celle des figures 6 et 8. La collerette 288b de la broche 288 est en appui radial sur une face supérieure de la paroi 295a de la coquille 220b. La broche 288 comprend un premier tronçon 288c qui traverse l'orifice 220b1 de cette paroi 295a et un premier épaulement cylindrique 288c1 qui prend appui sur une face supérieure de la paroi 294a de la coquille 220a. La broche 288 comprend un second tronçon 288d de plus petit diamètre qui traverse l'orifice 22a1 de cette paroi 294a et un second épaulement cylindrique 288d1 qui prend appui avec cette paroi 294a sur la rotule 286. La broche 288 comprend un troisième tronçon 288e de plus petit diamètre qui traverse l'orifice de cette rotule 286 qui est en appui avec un troisième épaulement cylindrique 288e1 sur une face supérieure de la paroi 294b de la coquille 220b. La broche 288 comprend un quatrième tronçon 288f de plus petit diamètre qui traverse l'orifice 220a2 de cette paroi 294b et un quatrième épaulement cylindrique 288f1 qui prend appui sur une face supérieure de la paroi 295b de la coquille 220b. La broche 288 comprend un cinquième tronçon 288g de plus petit diamètre qui est logé dans l'orifice 220b2 de la paroi 295b.

Comme illustré aux figures 8 et 9, les parois 295aa, 295b de la coquille 220b définissent entre elles le logement 280 de montage du doigt 282 qui comprend une bague (non représentée) de montage de la rotule 286.

C'est donc directement la broche 288 qui vient maintenir les deux coquilles 220a, 220b indépendamment l'une de l'autre. Cela signifie qu'il n'est pas nécessaire d'indexer la broche pour maintenir les deux coquilles 220a, 220b en place radialement. Néanmoins, il est possible, pour ajouter une sécurité supplémentaire, d'introduire une indexation sur la broche ou tout autre système d'immobilisation permettent de garantir tout frottement entre les coquilles, comme illustré dans les figures suivantes.

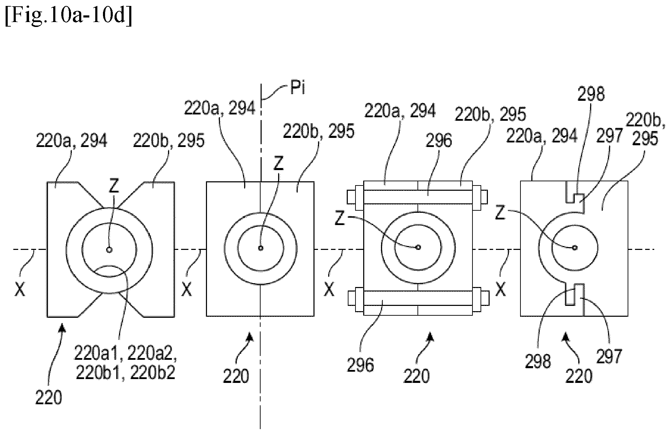

Les figures 10a à 10d montrent des variantes de réalisation des liaisons entre le porte-cage 222 et la cage 220 du porte-satellites 213.

La variante de réalisation de la figure 10a correspond à la précédente variante illustrée aux figures 8 et 9.

La variante de réalisation de la figure 10b diffère de celle de la figure 10a en ce que les pattes 294, 295 des coquilles 220a, 220b sont en appui axial les unes sur les autres. Cet appui axial a lieu de préférence dans un plan médian Pi de la cage qui est perpendiculaire à l'axe X.

La variante de réalisation de la figure 10c diffère de celle de la figure 10b en ce que les pattes 294, 295 des coquilles 220a, 220b sont de plus fixées axialement l'une sur l'autre, par exemple par l'intermédiaire de boulons 296 qui traversent des passages des pattes 294, 295.

La variante de réalisation de la figure 10d diffère de celle de la figure 10b en ce que les pattes 294, 295 des coquilles 220a, 220b sont de plus imbriquées axialement et circonférentiellement les unes dans les autres. Pour cela, l'une des coquilles 220a comprend des ergots 297 circonférentiels destinés à coopérer par emboîtement avec des encoches 298 de forme complémentaire de l'autre coquille 220b. Lors de l'assemblage de la cage 220, les coquilles 220a, 220b sont alignées sur l'axe X et les pattes 294 de la coquille 220a sont décalées axialement par rapport aux pattes 295 de la coquille 220b. Les coquilles 220a, 220b sont rapprochées l'une de l'autre jusqu'à ce que leurs pattes 294, 295 soient sensiblement situées dans un même plan perpendiculaire à l'axe X, tel que le plan Pi de la figure 10b, puis les coquilles 220a, 220b sont déplacées angulairement l'une par rapport à l'autre pour réaliser l'emboitement des ergots 297 dans les encoches 298. Pour l'assemblage du porte-satellites 213, dans un premier temps le solaire 11 et les satellites 12 du réducteur 210 sont montés dans une des coquilles 220a, puis on vient positionner l'autre coquille 220b. On vient par exemple ensuite positionner le porte-cage 222 avec les rotules 286 et enfin les broches 288 sont montées pour maintenir toutes les pièces entre elles.

## Revendications

1. Porte-satellites (213) pour un réducteur de vitesse (210) de turbomachine (1), ce porte-satellites (213) ayant un axe X principal et comportant:
- un porte-cage (222) comportant une rangée annulaire de doigt axiaux (282) autour de l'axe X, qui comportent des premiers éléments de liaison, et
- une cage (220) comportant une cavité interne (221) configurée pour contenir un solaire central (11) d'axe X de rotation et une rangée annulaire de satellites (12) disposés autour de l'axe X et engrenés avec ledit solaire (11) ainsi qu'avec une couronne (14) destinée à entourer la cage (220), la cage (220) comportant à sa périphérie des logements (280) et des seconds éléments de liaison qui sont montés dans lesdits logements et qui coopèrent avec les premiers éléments de liaison pour former des liaisons entre le porte-cage (222) et la cage (220), lesdites liaisons ayant au moins un degré de liberté,
la cage (220) comprenant deux coquilles (220a, 220b) qui sont assemblées axialement l'une à l'autre, lesdits premiers ou seconds éléments de liaison comportant des broches (288) orientées radialement par rapport audit axe X et traversants des orifices radiaux (220a1, 220a2, 220b1, 220b2) desdites coquilles (220a, 220b),
**caractérisé en ce que** chacune des coquilles (220a, 220b) comprend des pattes (294, 295) qui sont régulièrement réparties autour de l'axe X et qui sont au moins en partie superposées en direction radiale avec les pattes (294, 295) de l'autre coquille (220a, 220b), ces pattes (294, 295) comportant un ou deux orifices radiaux (220a1, 220a2, 220b1, 220b2) de montage de chacune des broches (288).

2. Porte-satellites (213) selon la revendication 1, dans lequel lesdits seconds éléments comportent lesdites broches (288) et des rotules (286) traversées par ces broches, et lesdits premiers éléments comportent des bagues (284) dans lesquelles sont logées lesdites rotules (286).

3. Porte-satellites (213) selon la revendication 1, dans lequel lesdits premiers éléments comportent lesdites broches (288) et des rotules (286) traversées par ces broches, et lesdits seconds éléments comportent des bagues (284) dans lesquelles sont logées lesdites rotules (286).

4. Porte-satellites (213) selon l'une des revendications précédentes, dans lequel chacune des pattes (294) d'une première des coquilles (220a) comprend deux premières parois (294a, 294b) parallèles qui comprennent respectivement deux orifices radiaux (220a1, 220a2) alignés de montage d'une des broches (288).

5. Porte-satellites (213) selon l'une des revendications précédentes, dans lequel chacune des pattes (295) d'une seconde des coquilles (220b) comprend deux secondes parois (295a, 295b) parallèles qui comprennent respectivement deux orifices radiaux (220b1 ,220b2) alignés de montage de cette même broche (288).

6. Porte-satellites (213) selon la revendication 5 lorsqu'elle dépend de la revendication 4, dans lequel les premières parois (294a, 294b) sont situées entre les secondes parois (295a, 295b), ou l'une des premières parois (294a, 294b) est intercalée entre les deux secondes parois (295a, 295b).

7. Porte-satellites (213) selon la revendication 6, ou selon la revendication 5 lorsqu'elle dépend de la revendication 4, dans lequel lesdits doigts (282) sont intercalés entre les premières parois (294a, 294b) et entre les secondes parois (295a, 295b).

8. Porte-satellites (213) selon la revendication 7, ou selon la revendication 6, ou selon la revendication 5 lorsqu'elle dépend de la revendication 4, dans lequel lesdits doigts (282) ont chacun une forme générale en C et comportent deux branches parallèles entre lesquelles sont intercalées lesdites première (294a, 294b) et seconde parois (295a, 295b).

9. Porte-satellites (213) selon l'une des revendications précédentes, dans lequel les coquilles (220a, 220b) sont en appui axial l'une contre l'autre, et/ou sont fixées axialement l'une à l'autre, et/ou sont imbriquées axialement et/ou circonférentiellement l'une dans l'autre.

10. Réducteur mécanique (210) pour une turbomachine (1) d'aéronef, comportant un porte-satellites (213) selon l'une des revendications précédentes, un solaire (11) monté dans ladite cavité (221) et centré sur ledit axe X, une couronne (14) s'étendant autour du solaire (11), et des satellites (12) montés dans ladite cavité (221) et engrenés avec le solaire (11) et la couronne (14).

11. Turbomachine (1), en particulier d'aéronef, comportant un réducteur (210) selon la revendication précédente.

## Patentansprüche

1. Satellitenträger (213) für ein Untersetzungsgetriebe (210) eines Turbotriebwerks (1), wobei dieser Satellitenträger (213) eine Hauptachse X aufweist, und Folgendes umfasst:
- einen Käfigträger (222), der eine ringförmige Reihe axialer Finger (282) um die X-Achse herum umfasst, die erste Verknüpfungsglieder umfassen, und
- einen Käfig (220), der einen inneren Hohlraum (221) umfasst, der konfiguriert ist, um ein zentrales Sonnenrad (11) mit einer Drehachse X und eine ringförmige Reihe von Satelliten (12) zu enthalten, die um die X-Achse herum angeordnet sind, und mit dem Sonnenrad (11), sowie mit einem Kranz (14) in Eingriff zu stehen, der dazu bestimmt ist, de Käfig (220) zu umgeben, wobei der Käfig (220) an seiner Peripherie Aufnahmen (280) und zweite Verknüpfungsglieder umfasst, die in den Aufnahmen angebracht sind und die mit den ersten Verknüpfungsgliedern zusammenwirken, um Verknüpfungen zwischen dem Käfigträger (222) und dem Käfig (220) zu bilden, wobei die Verknüpfungen mindestens einen Freiheitsgrad aufweisen,
wobei der Käfig (220) zwei Schalen (220a, 220b) umfasst, die axial miteinander zusammengesetzt sind, wobei die ersten oder zweiten Verknüpfungsglieder Spindeln (288) umfassen, die in Bezug auf die X-Achse radial ausgerichtet sind, und radiale Öffnungen (220a1, 220a2, 220b1, 220b2) der Schalen (220a, 220b) durchqueren,
**dadurch gekennzeichnet, dass** jede der Schalen (220a, 220b) Laschen (294, 295) umfasst, die regelmäßig um die X-Achse herum verteilt sind, und die mindestens teilweise in radialer Richtung mit den Laschen (294, 295) der anderen Schale (220a, 220b) überlagert sind, wobei diese Laschen (294, 295) eine oder zwei radiale Öffnungen (220a1, 220a2, 220b1, 220b2) zum Anbringen jeder der Spindeln (288) umfassen.

2. Satellitenträger (213) nach Anspruch 1, wobei die zweiten Glieder die Spindeln (288) und Kugelgelenke (286) umfassen, die von diesen Spindeln durchquert werden, und die ersten Glieder Ringe (284) umfassen, in denen die Kugelgelenke (286) aufgenommen sind.

3. Satellitenträger (213) nach Anspruch 1, wobei die ersten Glieder die Spindeln (288) und Kugelgelenke (286) umfassen, die von diesen Spindeln durchquert werden, und die zweiten Glieder Ringe (284) umfassen, in denen die Kugelgelenke (286) aufgenommen sind.

4. Satellitenträger (213) nach einem der vorstehenden Ansprüche, wobei jede der Laschen (294) einer ersten der Laschen (220a) zwei erste parallele Wände (294a, 294b) umfasst, die jeweils zwei radiale Öffnungen (220a1, 220a2) umfassen, die zum Anbringen einer der Spindeln (288) ausgerichtet sind.

5. Satellitenträger (213) nach einem der vorstehenden Ansprüche, wobei jede der Laschen (295) einer zweiten der Laschen (220b) zwei zweite parallele Wände (295a, 295b) umfasst, die jeweils zwei radiale Öffnungen (220b1, 220b2) umfassen, die zum Anbringen dieser selben Spindel (288) ausgerichtet sind.

6. Satellitenträger (213) nach Anspruch 5, wenn von Anspruch 4 abhängig, wobei sich die ersten Wände (294a, 294b) zwischen den zweiten Wänden (295a, 295b) befinden, oder eine der ersten Wände (294a, 294b) zwischen den beiden zweiten Wänden (295a, 295b) eingeschoben ist.

7. Satellitenträger (213) nach Anspruch 6, oder nach Anspruch 5, wenn von Anspruch 4 abhängig, wobei die Finge (282) zwischen den ersten Wänden (294a, 294b) und zwischen den zweiten Wänden (295a, 295b) eingeschoben sind.

8. Satellitenträger (213) nach Anspruch 7, oder nach Anspruch 6, oder nach Anspruch 5, wenn von Anspruch 4 abhängig, wobei die Finger (282) jeweils eine allgemeine C-Form aufweisen, und zwei parallele Schenkel umfassen, zwischen denen die erste (294a, 294b) und zweite Wand (295a, 295b) eingeschoben sind.

9. Satellitenträger (213) nach einem der vorstehenden Ansprüche, wobei die Schalen (220a, 220b) axial aneinander anliegen, und/oder axial aneinander befestigt sind, und/oder axial und/oder umfänglich ineinandergreifen.

10. Mechanisches Getriebe (210) für ein Turbotriebwerk (1) eines Luftfahrzeugs, welches einen Satellitenträger (213) nach einem der vorstehenden Ansprüche, ein Sonnenrad (11), das in dem Hohlraum (221) angebracht ist und an der X-Achse zentriert ist, einen Kranz (14), der sich um das Sonnenrad (11) erstreckt, und Satelliten (12), die in dem Hohlraum (221) angebracht sind, und mit dem Sonnenrad (11) und dem Kranz (14) in Eingriff stehen, umfasst.

11. Turbotriebwerk (1), insbesondere eines Luftfahrzeugs, welches ein Getriebe (210) nach dem vorstehenden Anspruch umfasst.

## Claims

1. A planet carrier (213) for a speed reducer (210) of a turbomachine (1), this planet carrier (213) having a main axis X and comprising:
- a cage carrier (222) comprising an annular row of axial fingers (282) about the axis X, which comprises first connection elements, and
- a cage (220) comprising an internal cavity (221) configured to contain a central sun gear (11) of axis X of rotation and an annular row of planet gears (12) arranged around the axis X and meshed with said sun gear (11) as well as with a ring gear (14) intended to surround the cage (220), the cage (220) comprising at its periphery housings (280) and second connection elements which are mounted in said housings and which cooperate with the first connection elements to form connections between the cage carrier (222) and the cage (220), said connections having at least one degree of freedom,
the cage (220) comprising two shells (220a, 220b) which are axially assembled to each other, said first or second connection elements comprising broaches (288) oriented radially with respect to said axis X and passing through radial orifices (220a1, 220a2, 220b1, 220b2) of said shells (220a, 220b),
**characterised in that** each of the shells (220a, 220b) comprises tabs (294, 295) evenly distributed about the axis X and being at least partly superimposed in radial direction with the tabs (294, 295) of the other shell (220a, 220b), the tabs (294, 295) comprising one or two orifices (220a1, 220a2, 220b1, 220b2) for mounting each of the broaches (288).

2. The planet carrier (213) according to claim 1, wherein said second elements comprise said broaches (288) and ball joints (286) through which these broaches pass, and said first elements comprise rings (284) in which said ball joints (286) are housed.

3. The planet carrier (213) according to claim 1, wherein said first elements comprise said broaches (288) and ball joints (286) through which these broaches pass, and said second elements comprise rings (284) in which said ball joints (286) are housed.

4. The planet carrier (213) according to one of the preceding claims, wherein each of the tabs (294) of a first of the shells (220a) comprises two parallel first walls (294a, 294b) which respectively comprise two aligned radial orifices (220a1, 220a2) for mounting one of the broaches (288).

5. The planet carrier (213) according to one of the preceding claims, wherein each of the tabs (295) of a second of the shells (220b) comprises two parallel second walls (295a, 295b) which respectively comprise two aligned radial orifices (220b1, 220b2) for mounting this same broach (288).

6. The planet carrier (213) according to claim 5 when depending on claim 4, wherein the first walls (294a, 294b) are located between the second walls (295a, 295b), or one of the first walls (294a, 294b) is interposed between the two second walls (295a, 295b).

7. The planet carrier (213) according to claim 6 or to claim 5 when depending on claim 4, wherein said fingers (282) are interposed between the first walls (294a, 294b) and between the second walls (295a, 295b).

8. The planet carrier (213) according to claim7, or according to claim 6, or according to claim 5 when depending on claim 4, wherein said fingers (282) are each generally C-shaped and comprise two parallel branches between which are interposed said first (294a, 294b) and second walls (295a, 295b).

9. The planet carrier (213) according to one of the preceding claims, wherein the shells (220a, 220b) are supported axially one against the other, and/or are axially attached to each other, and/or are axially and/or circumferentially nested within each other.

10. A mechanical reducer (210) for an aircraft turbomachine (1), comprising a planet carrier (213) according to one of the preceding claims, a sun gear (11) mounted in said cavity (221) and centred on said axis X, a ring gear (14) extending around the sun gear (11), and planet gears (12) mounted in said cavity (221) and meshed with the sun gear (11) and the ring gear (14).

11. A turbomachine (1), in particular for an aircraft, comprising a reducer (210) according to the preceding claim.
